(19) **Europäisches Patentamt European Patent Office Office européen des brevets**

(11) **EP 4 421 896 A1**

(12) **EUROPEAN PATENT APPLICATION**
published in accordance with Art. 153(4) EPC

(43) Date of publication:
**28.08.2024 Bulletin 2024/35**

(21) Application number: **22883533.6**

(22) Date of filing: **17.10.2022**

(51) International Patent Classification (IPC):
**H01M 4/131** (2010.01)   **H01M 4/36** (2006.01)

(52) Cooperative Patent Classification (CPC):
**H01M 4/131; H01M 4/36;** Y02E 60/10

(86) International application number:
**PCT/JP2022/038615**

(87) International publication number:
**WO 2023/068229 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 JP 2021173274**

(71) Applicant: **Panasonic Energy Co., Ltd.
Osaka 570-8511 (JP)**

(72) Inventors:
• **IKEDA, Tomoki
  Kadoma-shi, Osaka 571-0057 (JP)**
• **AOTANI, Masashi
  Kadoma-shi, Osaka 571-0057 (JP)**
• **SAKITANI, Nobuhiro
  Kadoma-shi, Osaka 571-0057 (JP)**

(74) Representative: **Novagraaf International SA
Chemin de l'Echo 3
1213 Onex, Geneva (CH)**

(54) **NONAQUEOUS ELECTROLYTE SECONDARY BATTERY POSITIVE ELECTRODE AND NONAQUEOUS ELECTROLYTE SECONDARY BATTERY**

(57)   This nonaqueous electrolyte secondary battery positive electrode according to one embodiment comprises a positive electrode mixture layer that contains, as positive electrode active materials, first lithium-containing transition metal composite oxide particles, which are non-aggregated particles having a volume-based median diameter of 2-10 $\mu$m, and second lithium-containing transition metal composite oxide particles, which are secondary particles having a volume-based median diameter of 10-30 $\mu$m and formed by the agglomeration of primary particles having an average particle diameter of 50 nm-2 $\mu$m, and that has a first layer formed on the positive electrode core material side and a second layer formed on the first layer. The first layer contains at least the first composite oxide particles, and the content of said composite oxide particles is 80% or more relative to the total mass of the positive electrode active materials contained in the first layer. The second layer contains at least the second composite oxide particles.

Figure 2

EP 4 421 896 A1

**Description**

TECHNICAL FIELD

The present disclosure relates to a positive electrode for a non-aqueous electrolyte secondary battery, and a non-aqueous electrolyte secondary battery using the positive electrode.

BACKGROUND ART

With spread of non-aqueous electrolyte secondary batteries for on-board use and power storage use, a non-aqueous electrolyte secondary battery having a large capacity and excellent output characteristics has been required in recent years. Since a positive electrode significantly affects battery characteristics including battery capacity and output characteristics, many investigations have been made on the positive electrode. For example, Patent Literatures 1 to 3 disclose a positive electrode for a non-aqueous electrolyte secondary battery using, as a positive electrode active material, single-crystal particles of a lithium-containing transition metal composite oxide and secondary particles formed by aggregation of primary particles.

CITATION LIST

PATENT LITERATURE

PATENT LITERATURE 1: Japanese Unexamined Patent Application Publication No. Hei 07-037576
PATENT LITERATURE 2: Japanese Unexamined Patent Application Publication No. 2018-045998
PATENT LITERATURE 3: Japanese Unexamined Patent Application Publication No. 2020-053386

SUMMARY

For the non-aqueous electrolyte secondary battery, it is an important challenge to improve the output characteristics while keeping a high filling density of a positive electrode mixture layer to attempt to increase the capacity. However, typically, increased filling density of the positive electrode mixture layer is likely to be associated with deterioration of the output characteristics, and it is not easy to achieve both of the high filling density of the positive electrode mixture layer and the excellent output characteristics of the battery.

It is an object of the present disclosure to provide a positive electrode for a non-aqueous electrolyte secondary battery to contribute to improvement of the output characteristics of the battery while keeping the high filling density of the mixture layer.

A positive electrode for a non-aqueous electrolyte secondary battery according to the present disclosure comprises: a positive electrode core; and a positive electrode mixture layer formed on a surface of the positive electrode core, wherein: the positive electrode mixture layer contains, as a positive electrode active material, first lithium-containing transition metal composite oxide particles that are non-aggregated particles having a median diameter on a volumetric basis of greater than or equal to 2 $\mu$m and less than or equal to 10 $\mu$m, and second lithium-containing transition metal composite oxide particles that are secondary particles having a median diameter on a volumetric basis of greater than or equal to 10 $\mu$m and less than or equal to 30 $\mu$m formed by aggregation of primary particles having an average particle diameter of greater than or equal to 50 nm and less than or equal to 2 $\mu$m; the positive electrode mixture layer has a first layer formed closer to the positive electrode core, and a second layer formed on the first layer; the first layer contains at least the first lithium-containing transition metal composite oxide particles, and a content of the first lithium-containing transition metal composite oxide particles is greater than or equal to 80 mass% based on a total mass of the positive electrode active material contained in the first layer; and the second layer contains at least the second lithium-containing transition metal composite oxide particles.

A non-aqueous electrolyte secondary battery according to the present disclosure comprises: the above positive electrode; a negative electrode; and a non-aqueous electrolyte.

According to the positive electrode for a non-aqueous electrolyte secondary battery of the present disclosure, the output characteristics of the battery can be improved while keeping the high filling density of the mixture layer.

BRIEF DESCRIPTION OF DRAWINGS

FIG. 1 is a sectional view of a non-aqueous electrolyte secondary battery of an example of an embodiment.
FIG. 2 is a sectional view of a positive electrode of an example of an embodiment.

DESCRIPTION OF EMBODIMENTS

As noted above, it is an important challenge to achieve both of the high filling density of the positive electrode mixture layer and the excellent output characteristics in non-aqueous electrolyte secondary batteries. The present inventors have made intensive investigation to address this challenge, and consequently found that the output characteristics of the battery are effectively improved while keeping the high filling density of the mixture layer by using specific non-aggregated particles and specific secondary particles in combination as a positive electrode active material, and by containing a large amount of the non-aggregated particles in a first layer (underlayer) formed in a positive electrode mixture layer closer to the core.

In the case of using only the non-aggregated particles as the positive electrode active material, the output characteristics are improved but the battery capacity decreases due to deterioration of the filling property of the positive electrode active material. In the case of using only the secondary particles, the particles easily break in the step of compressing the positive electrode to block a gap between the particles with the broken particles, and thereby the filling density of the active material is increased but the output characteristics deteriorate compared with the case of using only the non-aggregated particles as the positive electrode active material. It is also impossible to achieve both of the characteristics at the same time even in the case of using a mixture of the non-aggregated particles and the secondary particles as the positive electrode active material.

Hereinafter, an example of embodiments of the positive electrode for a non-aqueous electrolyte secondary battery according to the present disclosure and a non-aqueous electrolyte secondary battery using the positive electrode will be described in detail with reference to the drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery) or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

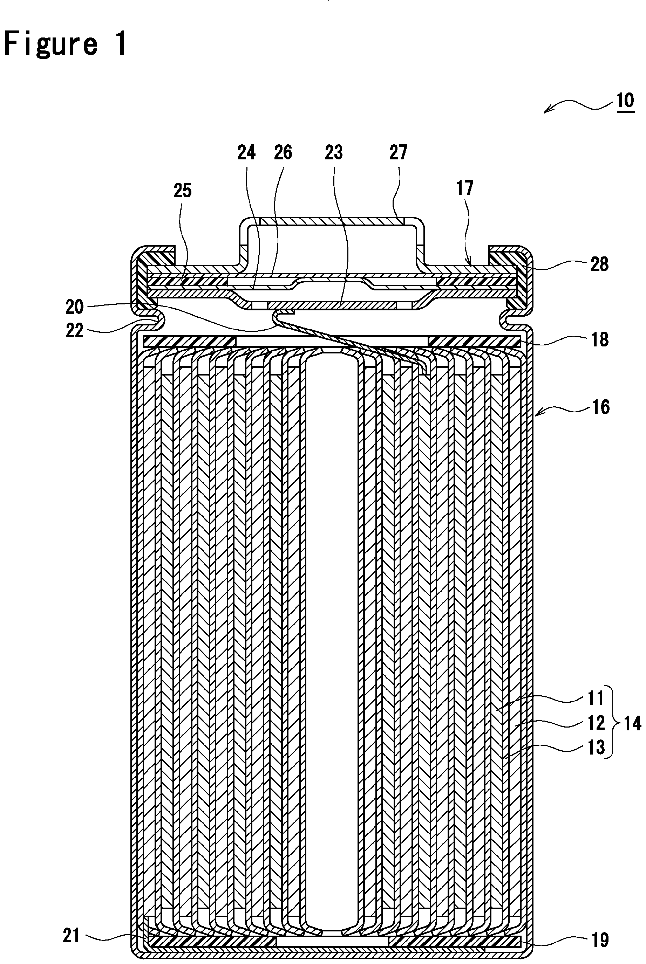

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen atoms of these solvents are at least partially replaced with a halogen atom such as fluorine. An example of the non-aqueous solvent is ethylene carbonate (EC), ethyl methyl carbonate (EMC), dimethyl carbonate (DMC), or a mixed solvent thereof. For the electrolyte salt, a lithium salt such as $LiPF_6$ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, specifically the positive electrode 11, will be described in detail.

[Positive Electrode]

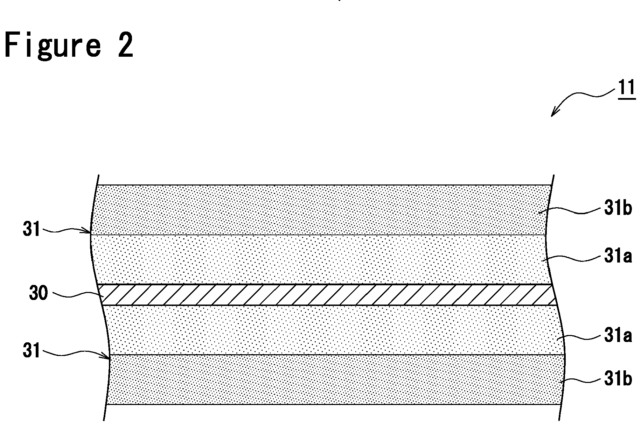

FIG. 2 is a sectional view of the positive electrode 11. As illustrated in FIG. 2, the positive electrode 11 comprises a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. An example of the positive electrode core 30 is a foil of aluminum or an aluminum alloy having a thickness of greater than or equal to 10 $\mu$m and less than or equal to 20 $\mu$m. The positive electrode mixture layer 31 includes a positive electrode active material, a conductive agent, and a binder, and preferably formed on both surfaces of the positive electrode core 30.

Examples of the conductive agent included in the positive electrode mixture layer 31 include a carbon material such as carbon black, acetylene black, Ketjenblack, graphite, carbon nanotube, carbon nanofiber, and graphene. A content of the conductive agent is, for example, greater than or equal to 0.01 part by mass and less than or equal to 10 parts by mass, and preferably greater than or equal to 0.05 parts by mass and less than or equal to 5 parts by mass per 100 parts by mass of the positive electrode active material.

Examples of the binder included in the positive electrode mixture layer 31 include a fluorine-containing resin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination. A content of the binder is, for example, greater than or equal to 0.1 part by mass and less than or equal to 10 parts by mass, and preferably greater than or equal to 0.5 parts by mass and less than or equal to 5 parts by mass per 100 parts by mass of the positive electrode active material.

The positive electrode mixture layer 31 includes a particulate lithium-containing transition metal composite oxide as the positive electrode active material. The lithium-containing transition metal composite oxide is a composite oxide containing Co, Mn, Ni, Al, and the like in addition to Li. The metal element constituting the lithium-containing transition metal composite oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among them, at least one selected from the group consisting of Co, Ni, and Mn is preferably contained. An example of preferable composite oxides is a composite oxide containing Ni, Co, and Mn, and a composite oxide containing Ni, Co, and Al.

The positive electrode mixture layer 31 contains two types of the lithium-containing transition metal composite oxide particles having particle shapes different from each other as the positive electrode active material, and the positive electrode mixture layer 31 has a first layer 31a formed closer to the positive electrode core 30 and a second layer 31b formed on the first layer 31a. Although the positive electrode mixture layer 31 may include a third layer within a range not impairing the object of the present disclosure, the positive electrode mixture layer 31 preferably has a double-layer structure including the first layer 31a being an underlayer formed directly on the positive electrode core 30 and the second layer 31b formed directly on the first layer 31a. The first layer 31a and the second layer 31b respectively contain the two types of the lithium-containing transition metal composite oxide particles, or contain two types of the composite oxide particles and the mixing ratios thereof are different in each layer.

A thickness of the positive electrode mixture layer 31 is, for example, greater than or equal to 50 μm and less than or equal to 150 μm on one side of the positive electrode core 30. A thickness of the first layer 31a may be larger than a thickness of the second layer 31b, but preferably smaller than or equal to the thickness of the second layer 31b. It is not easy to accurately determine a ratio between the thickness of the first layer 31a and the thickness of the second layer 31b, and thereby the proportion of each layer in the positive electrode mixture layer 31 is evaluated with a mass ratio. The second layer 31b covers an entire region of the first layer 31a, and an area of each layer on the positive electrode core 30 is substantially equal. The proportion of the first layer 31a in the positive electrode mixture layer 31 is preferably less than or equal to 50 mass%.

The positive electrode mixture layer 31 contains, as the two types of the lithium-containing transition metal composite oxide particles: first lithium-containing transition metal composite oxide particles (first composite oxide particles) being non-aggregated particles; and second lithium-containing transition metal composite oxide particles (second composite oxide particles) being secondary particles formed by aggregation of primary particles having an average particle diameter of greater than or equal to 50 nm and less than or equal to 2 μm. The first layer 31a contains at least the first composite oxide particles, and the second layer 3 1b contains at least the second composite oxide particles.

The positive electrode mixture layer 31 may contain only the first and second composite oxide particles as the positive electrode active material, or may contain third lithium-containing transition metal composite oxide particles within a range not impairing the object of the present disclosure. An example of the third lithium-containing transition metal composite oxide particles is composite oxide particles not satisfying a particle diameter condition, described later. A content rate of the positive electrode active material is, for example, greater than or equal to 90 mass% based on the total mass of the positive electrode mixture layer 31, and may be same as or different from each other in the first layer 31a and in the second layer 31b.

In the positive electrode mixture layer 31, types and content rates of the conducive agent and the binder may be same as or different from each other in the first layer 31a and in the second layer 31b. In the present embodiment, the same type of the conductive agent is used in the first layer 31a and in the second layer 31b, and the content rates of the conductive agent are substantially equal. In addition, the same type of the binder is used in the first layer 31a and in the second layer 31b, and the content rates of the binder are substantially equal.

A median diameter (hereinafter, which may be referred to as "D50") on a volumetric basis of the first composite oxide particles is greater than or equal to 2 μm and less than or equal to 10 μm, and preferably greater than or equal to 3 μm and less than or equal to 8 μm. D50 of the second composite oxide particles is greater than or equal to 10 μm and less than or equal to 30 μm, and preferably greater than or equal to 12 μm and less than or equal to 20 μm. The D50 means a particle diameter at which a cumulative frequency is 50% from a smaller particle diameter side in a particle size distribution on a volumetric basis. The particle size distributions of the composite oxide particles may be measured by using a laser diffraction-type particle size distribution measuring device (for example, MT3000II, manufactured by MicrotracBEL Corp.) with water as a dispersion medium.

The first composite oxide particles are particles having no particle boundary inside the particles, and are primary particles of single crystals, for example. The crystallinity of the composite oxide particles can be determined by using a scanning ion microscope. The first composite oxide particle being non-aggregated particle may include less than or equal to five primary particles. The non-aggregated particle herein means a particle composed of one primary particle having no particle boundary inside the particle, and a particle composed of less than or equal to five primary particles.

The second composite oxide particles are secondary particles formed by aggregation of many primary particles having an average particle diameter of greater than or equal to 50 nm and less than or equal to 2 μm, preferably greater than or equal to 500 nm and less than or equal to 2 μm. In the second composite oxide particles, many particle boundaries of the primary particles are present. The primary particle may be determined by observing the second composite oxide particles with a scanning electron microscope (SEM). A plurality of primary particles adheres to each other with strength not to disintegrate even when a strong force is applied such as crushing the second composite oxide particles after the synthesis or preparing a positive electrode mixture slurry.

The average particle diameter of the primary particles constituting the second composite oxide particles may be determined by analyzing an SEM image of cross sections of the particles. For example, the positive electrode 11 is embedded into a resin, the cross section is produced by cross-section polisher (CP) processing, and this cross section is imaged with the SEM. From the SEM image, 30 primary particles are randomly selected to observe the particle boundary, a diameter of a circumscribed circle of each of the 30 primary particles is determined, and an average value thereof is specified as the average particle diameter.

Each of the lithium-containing transition metal composite oxide particles may be synthesized by a method described in Examples, described later. The first composite oxide particles may be synthesized by, for example, raising a pH of an alkaline aqueous solution used for synthesizing a precursor (metal composite hydroxide) including Ni, Co, Mn, Al, and the like compared with a case of synthesizing the second composite oxide particles. Alternatively, the first composite oxide particles may be synthesized by raising a calcination temperature of the precursor instead of or in addition to raising the pH of the alkaline aqueous solution.

An example of a preferable pH of the alkaline aqueous solution for synthesizing the first composite oxide particles is greater than or equal to 10 and less than or equal to 11, and an example of a preferable calcination temperature is greater than or equal to 950°C and less than or equal to 1100°C. For synthesizing the second composite oxide particles, an alkaline aqueous solution having a pH of greater than or equal to 9 and less than or equal to 10 is used, and the calcination temperature is set to less than or equal to 950°C, for example.

Each of the lithium-containing transition metal composite oxide particles is composed of, for example, a composite oxide having a hexagonal crystal structure belonging to the space group R-3m, and preferably composed of $LiNi_xCo_yMn_zO_2$ (0.3<x<0.6, x+y+z=1) or $LiNi_xCo_yAl_zO_2$ (0.8<x<0.95, x+y+z=1) as a main component. Here, the main component means a component with the highest mass proportion among the components constituting the composite oxide particles. The composition of each of the composite oxide particles may be same as or different from each other.

As noted above, the positive electrode mixture layer 31 has the double-layer structure including: the first layer 31a containing at least the first composite oxide particles; and the second layer 31b containing at least the second composite oxide particles. A content of the first composite oxide particles in the first layer 31a is greater than or equal to 80 mass%, or may be substantially 100 mass% based on the total mass of the positive electrode active material contained in the first layer 31a.

The first composite oxide particles being non-aggregated particles are less likely to break in the step of manufacturing the positive electrode 11 than the second composite oxide particles being secondary particles. Thus, the first composite oxide particles encroach upon the positive electrode core 30 to increase a contacting area between the positive electrode core 30 and the positive electrode mixture layer 31. Therefore, it is considered that setting the first composite oxide particles to be present in the first layer 31a being the underlayer of the positive electrode mixture layer 31 at greater than or equal to 80 mass% reduces electric resistance between the positive electrode core 30 and the positive electrode mixture layer 31, and consequently improves the output characteristics of the battery.

The first layer 31a may contain the second composite oxide particles as the positive electrode active material. Note that a content thereof is necessarily less than or equal to 20 mass% based on the total mass of the positive electrode active material contained in the first layer 31a. If the proportion of the first composite oxide particles in the positive electrode active material in the first layer 31a is lower than 80 mass%, the effect of reducing the electric resistance between the positive electrode core 30 and the positive electrode mixture layer 31 fails to be obtained, which fails to attempt to improve the output characteristics.

A proportion of the first layer 31a in the positive electrode mixture layer 31 is preferably greater than or equal to 5 mass%, and more preferably greater than or equal to 10 mass% based on the total mass of the positive electrode mixture layer 31. Setting the proportion of the first layer to greater than or equal to 5 mass% or greater than or equal to 10 mass% effectively reduces the electric resistance between the positive electrode core 30 and the positive electrode mixture layer 31 to improve the output characteristics of the battery. An upper limit value of the proportion of the first layer 31a is not particularly limited, but preferably 50 mass% based on the total mass of the positive electrode mixture layer 31 from the viewpoint of increasing the capacity.

A preferable proportion of the first layer 31a in the positive electrode mixture layer 31 is greater than or equal to 5 mass% and less than or equal to 50 mass%, and more preferably greater than or equal to 10 mass% and less than or equal to 50 mass%. That is, the mass ratio between the first layer 31a and the second layer 31b is preferably from 10:90 to 50:50. The mass ratio between the first layer 31a and the second layer 31b within this range facilitates achievement of both of the high filling density of the positive electrode mixture layer 31 and the excellent output characteristics of the battery.

The second layer 31b may contain the first composite oxide particles as the positive electrode active material. Note that a content thereof is preferably less than or equal to 50 mass% based on the total mass of the positive electrode active material contained in the second layer 31b. A content of the second composite oxide particles in the second layer 3 1b is preferably greater than or equal to 50 mass% based on the total mass of the positive electrode active material contained in the second layer 31b. That is, the mass ratio between the first composite oxide particles and the second composite oxide particles in the second layer 31b is preferably from 50:50 to 0:100. The content of the second composite oxide particles in the second layer 31b may be greater than or equal to 80 mass%, or may be substantially 100 mass%. Adding a large amount of the second composite oxide particles to the second layer 31b may increase the filling density of the positive electrode mixture layer 31 to attempt to increase the capacity of the battery.

The positive electrode 11 may be produced by applying a positive electrode mixture slurry including the positive electrode active material, the conductive agent, the binder, and the like on the positive electrode core 30, and drying and then compressing the coating to form the positive electrode mixture layers 31 on both the surfaces of the positive electrode core 30. For the positive electrode mixture slurry, two types of slurries with different types of the positive electrode active material are used, for example. The positive electrode mixture layer 31 with the double-layer structure including the first layer 31a and the second layer 31b may be formed by: applying a first positive electrode mixture slurry containing only the first composite oxide particles as the positive electrode active material on the positive electrode core 30; and then applying a second positive electrode mixture slurry containing only the second composite oxide particles as the positive electrode active material on the coating.

[Negative Electrode]

The negative electrode 12 comprises a negative electrode core and a negative electrode mixture layer formed on a surface of the negative electrode core. For the negative electrode core, a foil of a metal stable within a potential range of the negative electrode 12, such as copper and a copper alloy, a film in which such a metal is disposed on a surface layer thereof, and the like may be used. An example of the negative electrode core is a foil of copper or a copper alloy having a thickness of greater than or equal to 5 $\mu$m and less than or equal to 15 $\mu$m. The negative electrode mixture layer includes a negative electrode active material and a binder, and is preferably formed on both surfaces of the negative electrode core. A thickness of the negative electrode mixture layer is, for example, greater than or equal to 30 $\mu$m and less than or equal to 150 $\mu$m on one side of the negative electrode core. The negative electrode 12 may be produced by applying a negative electrode mixture slurry including the negative electrode active material, the binder, and the like on the negative electrode core, and drying and compressing the coating to form the negative electrode mixture layers on both the surfaces of the negative electrode core.

The negative electrode mixture layer includes, for example, a carbon-based active material that reversibly occludes and releases lithium ions as the negative electrode active material. A preferable carbon-based active material is a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may be used, and the carbon-based active material and the Si-based active material may be used in combination.

For the binder included in the negative electrode mixture layer, a fluorine-containing resin such as PTFE and PVdF, PAN, a polyimide, an acrylic resin, a polyolefin, styrene-butadiene rubber (SBR), or the like may be used. The negative electrode mixture layer may include CMC or a salt thereof, polyacrylic acid (PAA) or a salt thereof, polyvinyl alcohol (PVA), and the like. A content of the binder is, for example, greater than or equal to 0.1 part by mass and less than or equal to 10 parts by mass, and preferably greater than or equal to 0.5 parts by mass and less than or equal to 5 parts by mass per 100 parts by mass of the negative electrode active material. To the negative electrode mixture layer, a conductive agent such as carbon black, acetylene black, and Ketjenblack may be added.

[Separator]

For the separator 13, a porous sheet having an ion permeation property and an insulation property is used. Specific examples of the porous sheet include a fine porous thin film, a woven fabric, and a nonwoven fabric. As a material for the separator, a polyolefin such as polyethylene and polypropylene, cellulose, and the like are preferable. The separator 13 may have a single layer structure or a multilayer structure. On a surface of the separator 13, a highly heat-resistant resin layer such as an aramid resin may be formed.

On an interface between the separator 13 and at least one of the positive electrode 11 and the negative electrode 12, a filler layer including an inorganic substance filler may be formed. Examples of the inorganic substance filler include an oxide or phosphate compound containing a metal element such as Ti, Al, Si, and Mg. The filler layer may be formed by applying a slurry containing the filler on a surface of the positive electrode 11, the negative electrode 12, or the separator 13.

EXAMPLES

Hereinafter, the present disclosure will be further described in detail with Examples, but the present disclosure is not limited to these Examples.

<Example 1>

[Synthesis of Non-Aggregated Particles (First Lithium-Containing Transition Metal Composite Oxide Particles)]

Nickel sulfate, cobalt sulfate, and manganese sulfate were mixed at predetermined proportions, and uniformly mixed in an alkaline aqueous solution having a pH of greater than or equal to 10 and less than or equal to 11 to synthesize a precursor. Then, the precursor and lithium carbonate were mixed, the mixture was calcined at a temperature of 1000°C for greater than or equal to 15 hours, and then the calcined product was crushed to obtain first lithium-containing transition metal composite oxide particles being non-aggregated particles. The composition and the particle diameter of the particles were as follows.

Composition: $LiNi_{0.5}Co_{0.2}Mn_{0.3}O_2$
D50: 4.5 $\mu$m

[Synthesis of Secondary Particles (Second Lithium-Containing Transition Metal Composite Oxide Particles)]

Secondary particles (second lithium-containing transition metal composite oxide particles) formed by aggregation of many primary particles were obtained in the same manner as of the first lithium-containing transition metal composite oxide particles except that: the pH of the alkaline aqueous solution was changed to greater than or equal to 9 and less than or equal to 10; and the calcination temperature was changed to 900°C. The composition and the particle diameter of the particles were as follows.

Composition: $LiNi_{0.5}Co_{0.2}Mn_{0.3}O_2$
Average particle diameter of primary particles: 1.6 $\mu$m
D50 of secondary particles: 14.1 $\mu$m

[Production of Positive Electrode]

In N-methyl-2-pyrrolidone (NMP), the first lithium-containing transition metal composite oxide being non-aggregated particles, acetylene black (AB), and polyvinylidene fluoride (PVdF) having an average molecular weight of approximately 1.1 million were mixed at a mass ratio of 98:1:1 to prepare a first mixture slurry having a solid-content concentration of 70 mass%. In addition, a second mixture slurry was prepared in the same manner as of preparing the first mixture slurry except that the second lithium-containing transition metal composite oxide being secondary particles was used instead of the first lithium-containing transition metal composite oxide.

The first mixture slurry was applied on both surfaces of a positive electrode core composed of an aluminum foil, the second mixture slurry was subsequently applied on the coating of the first mixture slurry, the coating was dried and compressed (linear pressure: 3000 N/m), and then cut to a predetermined electrode size to produce a positive electrode in which positive electrode mixture layers having a double-layer structure including an underlayer (first layer) and an upper layer (second layer) were formed on both the surfaces of the positive electrode core. Note that each of the mixture slurries was applied so that a mass ratio between the underlayer and the upper layer was 1:1.

[Production of Negative Electrode]

As a negative electrode active material, a mixture of 95 parts by mass of graphite and 5 parts by mass of silicon oxide represented by SiO was used. Mixing 100 parts by mass of the negative electrode active material, 1 part by mass of carboxymethylcellulose (CMC), and water was performed, and a dispersion of styrene-butadiene rubber (SBR) at 1.2 parts by mass in terms of the solid content was further mixed to prepare a negative electrode mixture slurry. Then, this negative electrode mixture slurry was applied on both surfaces of a negative electrode core composed of a copper foil, the coating was dried and compressed, and then cut to a predetermined electrode size to produce a negative electrode in which negative electrode mixture layers were formed on both the surfaces of the negative electrode core.

[Preparation of Non-Aqueous Electrolyte Liquid]

Ethylene carbonate (EC) and dimethyl carbonate (DMC) were mixed at a volume ratio (25°C) of 1:3. To 100 parts by mass of the mixed solvent was added 5 parts by mass of vinylene carbonate (VC), and $LiPF_6$ was dissolved so that the concentration was 1 mol/L to prepare a non-aqueous electrolyte liquid.

[Production of Battery]

A lead terminal was attached to each of the positive electrode and the negative electrode, and the positive electrode and the negative electrode were spirally wound with a separator interposed therebetween to produce a wound electrode assembly. This electrode assembly was housed in a bottomed cylindrical exterior housing can, the negative electrode lead was welded to a bottom inner face of the exterior housing can, and the positive electrode lead was welded to an internal terminal plate of a sealing assembly. Thereafter, the non-aqueous electrolyte was injected into the exterior housing can, and an opening edge of the exterior housing can was caulked and fixed with the sealing assembly to produce a non-aqueous electrolyte secondary battery having a battery capacity of 2500 mAh.

<Example 2>

A positive electrode and a non-aqueous electrolyte secondary battery were produced in the same manner as in Example 1 except that, in the production of the positive electrode, the amounts of the applied mixture slurries were each changed so that the mass ratio between the upper layer and the underlayer was 90:10.

<Comparative Example 1>

A positive electrode and a non-aqueous electrolyte secondary battery were produced in the same manner as in Example 1 except that, in the production of the positive electrode, the second mixture slurry was applied on the positive electrode core, and then the first mixture slurry was applied.

<Comparative Example 2>

A positive electrode and a non-aqueous electrolyte secondary battery were produced in the same manner as in Example 2 except that, in the production of the positive electrode, the second mixture slurry was applied on the positive electrode core, and then the first mixture slurry was applied.

<Comparative Example 3>

A positive electrode and a non-aqueous electrolyte secondary battery were produced in the same manner as in Example 1 except that, in the production of the positive electrode, the positive electrode mixture layer was formed by using only the second mixture slurry.

<Comparative Example 4>

A positive electrode and a non-aqueous electrolyte secondary battery were produced in the same manner as in Example 1 except that, in the production of the positive electrode, the positive electrode mixture layer was formed by using only the first mixture slurry.

<Comparative Example 5>

A mixture of the non-aggregated particles (the first lithium-containing transition metal composite oxide particles) and the secondary particles (the second lithium-containing transition metal composite oxide particles) at a mass ratio of 1:1, AB, and PVdF were mixed at a mass ratio of 98:1:1, and an appropriate amount of NMP was added as a dispersion medium to prepare a positive electrode mixture slurry having a solid-content concentration of 70 mass%. A positive electrode and a non-aqueous electrolyte secondary battery were produced in the same manner as in Example 1 except that the positive electrode mixture layer was formed by using only this positive electrode mixture slurry.
Each of the positive electrodes and each of the batteries in Examples and Comparative Examples were subjected to performance evaluation by the following method. Table 1 shows the evaluation results.

[Filling Density of Positive Electrode Mixture Layer]

The thickness and mass of the positive electrode were measured, and the filling density of the positive electrode mixture layer was calculated.

[Output Characteristics]

Output characteristics of the battery were evaluated with direct current resistance (DCR). A battery after initial charge and discharge was charged at a constant current of a current value of 0.2 It until a battery voltage reached 4.2 V. The battery was further charged at a constant voltage of 4.2 V until a current reached 0.05 It. Thereafter, the battery was discharged at a current value of 1.0 It for 10 seconds, and an amount of voltage drop due to the discharge was measured, and the DCR was determined with the following formula.

$$DCR \ (m\Omega) = (Amount \ of \ voltage \ drop \ (mV) \ / \ Current \ value \ (A))$$

[Table 1]

| | Positive electrode | | | | Battery |
|---|---|---|---|---|---|
| | Positive electrode active material | | Mass ratio of upper layer : underlayer | Filling density g/cc | Output characteristics (DCR) mΩ |
| | Upper layer | Underlayer | | | |
| Example 1 | Secondary particles | Non-aggregated particles | 50:50 | 3.5 | 28.8 |
| Example 2 | Secondary particles | Non-aggregated particles | 90:10 | 3.7 | 28.5 |
| Comparative Example 1 | Non-aggregated particles | Secondary particles | 50:50 | 3.5 | 33.2 |
| Comparative Example 2 | Non-aggregated particles | Secondary particles | 90:10 | 3.2 | 34.2 |
| Comparative Example 3 | Secondary particles | | - | 3.7 | 32.8 |
| Comparative Example 4 | Non-aggregated particles | | - | 3.1 | 29.2 |
| Comparative Example 5 | Non-aggregated particles / secondary particles (mass ratio 1: 1) | | - | 3.6 | 31.3 |

As shown in Table 1, all the batteries of Examples have low DCR and excellent output characteristics compared with the batteries of Comparative Examples. The positive electrodes of Examples keep the high filling density of the mixture layer. It is understood from Examples and Comparative Examples 1 to 3 that use of the first composite oxide particles being non-aggregated particles for the positive electrode active material in the underlayer reduces the DCR of the battery. It is considered that the non-aggregated particles are unlikely to break in the step of compressing the positive electrode, and therefore adding the non-aggregated particles to the underlayer allows the non-aggregated particles to encroach upon the core, thereby reducing the electric resistance between the mixture layer and the core, resulting in reduced DCR.

It is understood from Examples and Comparative Examples 2 to 4 that use of the second composite oxide particles being secondary particles for the positive electrode active material increases the filling density of the mixture layer. It is presumed that the secondary particles easily break in the step of compressing the positive electrode, and therefore use of the secondary particles blocks a gap between the particles with the broken particles, thereby increasing the filling density. In other words, using no secondary particles decreases the filling density of the mixture layer, leading to failed attempt to achieve increase in the capacity of the battery. In Comparative Example 4, decrease in the filling density tends to increase the DCR even when the non-aggregated particles are added to the underlayer.

It is understood from Example 2 that the mass proportion of the underlayer (underlayer containing the non-aggregated particles) based on the total mass of the mixture layer of greater than or equal to 10% may achieve good output characteristics. From Example 1 and Comparative Example 5, when the non-aggregated particles and the secondary particles are simply mixed to form the mixture layer with the single layer structure, the high filling density is obtained but the output characteristics considerably deteriorate. In this case, it is presumed that the electric resistance between the mixture layer and the core fails to be sufficiently reduced compared with the case of Examples, resulting in increased DCR.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First layer, 31b Second layer

**Claims**

1. A positive electrode for a non-aqueous electrolyte secondary battery, comprising:

   a positive electrode core; and
   a positive electrode mixture layer formed on a surface of the positive electrode core, wherein
   the positive electrode mixture layer contains, as a positive electrode active material, first lithium-containing transition metal composite oxide particles that are non-aggregated particles having a median diameter on a volumetric basis of greater than or equal to 2 $\mu$m and less than or equal to 10 $\mu$m, and second lithium-containing transition metal composite oxide particles that are secondary particles having a median diameter on a volumetric basis of greater than or equal to 10 $\mu$m and less than or equal to 30 $\mu$m formed by aggregation of primary particles having an average particle diameter of greater than or equal to 50 nm and less than or equal to 2 $\mu$m; and the positive electrode mixture layer has a first layer formed closer to the positive electrode core, and a second layer formed on the first layer,
   the first layer contains at least the first lithium-containing transition metal composite oxide particles, and a content of the first lithium-containing transition metal composite oxide particles is greater than or equal to 80 mass% based on a total mass of the positive electrode active material contained in the first layer, and
   the second layer contains at least the second lithium-containing transition metal composite oxide particles.

2. The positive electrode for a non-aqueous electrolyte secondary battery according to claim 1, wherein a mass ratio between the first lithium-containing transition metal composite oxide particles and the second lithium-containing transition metal composite oxide particles in the second layer is from 50:50 to 0:100.

3. The positive electrode for a non-aqueous electrolyte secondary battery according to claim 1 or 2, wherein a proportion of the first layer in the positive electrode mixture layer is greater than or equal to 10 mass% and less than or equal to 50 mass%.

4. A secondary battery, comprising:

   the positive electrode according to any one of claims 1 to 3;
   a negative electrode; and
   a non-aqueous electrolyte.

# Figure 1

Figure 2

31

30

31

11

31b

31a

31a

31b

## INTERNATIONAL SEARCH REPORT

| | International application No. |
|---|---|
| | **PCT/JP2022/038615** |

| A. | CLASSIFICATION OF SUBJECT MATTER |
|---|---|

*H01M 4/131*(2010.01)i; *H01M 4/36*(2006.01)i
FI: H01M4/131; H01M4/36 D

According to International Patent Classification (IPC) or to both national classification and IPC

| B. | FIELDS SEARCHED |
|---|---|

Minimum documentation searched (classification system followed by classification symbols)

H01M4/131; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018/150843 A1 (PANASONIC INTELLECTUAL PROPERTY MANAGEMENT CO., LTD.) 23 August 2018 (2018-08-23)<br>paragraphs [0019]-[0052], fig. 3 | 1-4 |
| P, X | WO 2022/044935 A1 (SANYO ELECTRIC CO) 03 March 2022 (2022-03-03)<br>paragraph [0059] | 1-4 |
| P, X | JP 2022-112207 A (PRIME PLANET ENERGY & SOLUTIONS INC.) 02 August 2022 (2022-08-02)<br>paragraphs [0035]-[0090], [0100]-[0119], fig. 3 | 1-4 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 421 896 A1**

INTERNATIONAL SEARCH REPORT
Information on patent family members

International application No.

**PCT/JP2022/038615**

| Patent document cited in search report | | | Publication date (day/month/year) | Patent family member(s) | | | Publication date (day/month/year) |
|---|---|---|---|---|---|---|---|
| WO | 2018/150843 | A1 | 23 August 2018 | US | 2020/0014023 | A1 | |
| | | | | paragraphs [0022]-[0056], fig. 3 | | | |
| | | | | CN | 110088970 | A | |
| WO | 2022/044935 | A1 | 03 March 2022 | (Family: none) | | | |
| JP | 2022-112207 | A | 02 August 2022 | US | 2022/0238865 | A1 | |
| | | | | paragraphs [0052]-[0131], [0143]-[0175], fig. 3 | | | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7037576 A
- JP 2018045998 A
- JP 2020053386 A